# EUROPEAN PATENT SPECIFICATION

(11) **EP 4 223 393 B1**
(45) Date of publication and mention of the grant of the patent: **06.11.2024**
(21) Application number: 21805555.6
(22) Date of filing: 29.09.2021
(51) Int. Cl.: B01D 53/22, B01D 53/58, C02F 1/44

(54) **EQUIPMENT AND METHOD FOR RECOVERING AMMONIA IN GASEOUS FLUIDS WITH HIGH AMMONIACAL NITROGEN CONTENT**
VORRICHTUNG UND VERFAHREN ZUR RÜCKGEWINNUNG VON AMMONIAK IN GASEN MIT HOHEM AMMONIAKSTICKSTOFFGEHALT
DISPOSITIF ET MÉTHODE POUR LA RÉCUPÉRATION DE L'AMMONIAQUE DANS LES FLUIDES GAZEUX À HAUTE TENEUR EN AZOTE AMMONIACAL

(30) Priority: 29.09.2020 ES 202030976
(43) Date of publication of application: 09.08.2023
(73) Proprietor: Universidad de Valladolid, 47002 Valladolid (ES); Instituto Technológico Agrario de Castilla y León (ITACYL), 47071 Valladolid (ES)
(72) Inventor: SÁNCHEZ BÁSCONES, Mercedes, 47002 Valladolid (ES); ANTOLÍN RODRÍGUEZ, Juan Manuel, 47002 Valladolid (ES); GARCÍA GONZÁLEZ, María Cruz, 47071 Valladolid (ES); MOLINUEVO SALCES, Beatriz, 47071 Valladolid (ES); RIAÑO IRAZÁBAL, Berta, 47071 Valladolid (ES)
(74) Representative: Pons
(86) International application number: PCT/ES2021/070707
(87) International publication number: WO 2022/069782

(56) References cited:
- CN-A- 105 944 537
- CN-A- 106 186 492
- CN-A- 107 684 809
- CN-A- 111 252 932
- US-B2- 9 708 200

## Description

### OBJECT OF THE INVENTION.

The present invention relates to equipment and methods for treating fluids with a high ammoniacal nitrogen content.

An object of the present invention is an equipment for recovering ammonia in fluids with a high ammoniacal nitrogen content, by using gas-permeable hydrophobic membranes. The equipment of the invention enables converting ammonia emissions generated by fluids with a high ammoniacal nitrogen content, and which are harmful to the environment, into salts to be used as fertilisers.

Another object of the invention is a method for recovering ammonia that enables obtaining fertiliser salt in fluids with a high ammoniacal nitrogen content.

### BACKGROUND OF THE INVENTION

Numerous studies have been carried out regarding air quality and emissions and, specifically, to reduce ammonia emissions and particles (aerosols) in agriculture within the code of good practice of the United Nations Economic Commission for Europe.

The agricultural sector, and specifically the livestock sector, is directly related to the emission of different types of gases into the atmosphere, fundamentally CH₄, CO₂, N₂O and NH₃, largely due to the decomposition of the solid and liquid waste that is generated. These emissions significantly contribute to global warming and climate change. The importance of NH₃ emissions lies in their ability to form aerosols, their ability to acidify soils, groundwater and surface water and their potential for eutrophication.

Nitrification/denitrification is currently used in most wastewater treatment facilities to remove nitrogen. In this process, ammoniacal nitrogen (N-NH₃) is biologically transformed into elemental nitrogen (N₂), which is released into the atmosphere in the form of gas as a harmless final product, although it entails an enormous loss of nitrogen.

In this context, nitrogen recovery is a challenge to improve wastewater and agro-industrial water treatment, since it would enable, on the one hand, avoiding the eutrophication of water and ammonia emissions and on the other, using this nutrient as a fertiliser, thus reducing the environmental and economic impact of its industrial production.

Patent US9,708,200B2 uses tubular membranes made of expanded polytetrafluoroethylene (e-PTFE) that are gas-permeable and hydrophobic for recovering ammonia.

These membranes are immersed in the residual water and an acid solution circulates therein, usually prepared from sulphuric acid, although other inorganic acids (such as HCl, HNOs or H₃PO₄) or organic acids such as lactic acid can be used. Due to the difference in concentration of NH₃ gas between both sides of the membrane, the NH₃ contained in wastewater passes through the membrane and is captured and concentrated in the acid solution. Once in the acid solution, the NH₃ combines with free protons to form ammonia ions (NH₄⁺), which are nonvolatile, forming a fertilising salt. The efficiency of gas-permeable membranes is directly related to the NH₃ present in wastewater, wherein the existing forms of ammoniacal nitrogen, NH₃ and NH₄⁺, are in balance. This balance depends on the pH and temperature of the wastewater. This patent proposes to increase the pH of the wastewater both with the addition of an alkaline solution and by aeration, in this latter case, requiring the addition of a nitrification inhibitor to prevent the oxidation of ammoniacal nitrogen to nitrite and nitrate, and thus ensure the availability thereof to be captured by the membrane.

Moreover, patent TW1552965B discloses a method and a device for treating wastewater containing ammoniacal nitrogen. The method includes the steps of: 1) adjusting the pH of a wastewater containing ammoniacal nitrogen to convert the ammonium ions (NH₄⁺) to volatile ammonia (NH₃), 2) pumping the wastewater containing ammoniacal nitrogen into hollow polytetrafluoroethylene (PTFE) fibres and 3) pumping an acid solution to the other side of the hollow PTFE fibres, so that the volatile ammonia passes from the wastewater through the hollow PTFE fibres to the side of the acid solution, wherein it is captured and concentrated.

On the other hand, CN105944537A describes a device and a method for removing ammonia from a gaseous mixture by means of gas permeable hydrophobic PTFE hollow fibre membranes in which a sulphuric acid absorption solution is circulated.

### DESCRIPTION OF THE INVENTION

The present invention relates to an equipment as defined by claim 1, which in general terms is an equipment for recovering ammonia in fluids with a high ammoniacal nitrogen content, comprising:
- an ammonia recovery tank,
- a drive unit for driving the fluid with a high ammoniacal nitrogen content connected to the ammonia recovery tank to drive the fluid towards said tank,

- one or more membrane devices, which can be cartridges, panels and/or frames, located inside the ammonia recovery tank, comprising at least one tubular membrane made of e-PTFE (expanded polytetrafluoroethylene) material, which is gas-permeable and hydrophobic,
- an acid solution tank, intended to contain an acid solution to capture and retain ammonia from the fluid with a high ammoniacal nitrogen content, and which is preferably selected from H₂SO₄, HCl, H₃PO₄, HNOs or lactic acid,
- a drive pump, connected to the acid solution tank and to the membrane devices, intended to drive the acid solution through the inside of the membrane devices that are in the ammonia recovery tank, and
- a recirculation duct, connecting the membrane devices of the ammonia recovery tank with the acid solution tank, and that returns the acid solution to the acid solution tank, either by the effect of gravity or by the action of an auxiliary pump connected to said recirculation duct.

The equipment further comprises a temperature control unit, which comprises, in turn, a temperature probe and a heater, preferably a heating blanket, to increase the temperature of the acid solution.

The heating is switched on when the temperature of the acid solution to be treated is less than 10°C in order to prevent the solution from freezing in cold months.

Also, the equipment of the invention comprises a first pH control unit, connected to the acid solution tank, which controls the pH inside the acid solution tank and which comprises a pH probe and an actuator intended to add concentrated sulphuric acid when the measured pH is greater than 2. To ensure a constant capture of ammonia, it is necessary to keep the pH of the acid solution below 2, for which concentrated sulphuric acid (96-98%) is added until the pH is less than 2.

The equipment of the invention can operate in batches or continuously, depending on the size of the equipment. It can also be conceived as a modular unit, wherein the ammonia recovery tank, the membrane devices, the drive unit, the acid solution tank, the drive pump and/or the recirculation duct are removable and movable. Furthermore, the maintenance of the membrane devices (cartridges, panels and frames) will be more comfortable as each panel is independent.

The equipment can further comprise a unit for controlling the concentration of nitrogen in the acid solution, connected to the acid solution tank, by means of indirect measurement, by means of a probe, of the electrical conductivity in the acid solution tank.

Moreover, the equipment further comprises a unit for controlling the pressure of the acid solution connected to the outlet of the acid solution tank, comprising an actuator, a pressure gauge to measure pressure, and a rotameter to control the flow rate, connected to the drive pump, such that, if they are outside of a predetermined range, the actuator acts on the drive pump to modify the pumping pressure. The pressure of the pump is a key factor in the durability of the membranes as too high a pressure can permanently damage the e-PTFE membranes, whereas if the pressure is too low, the circulation of the acid solution through the membranes is prevented with the risk that the salt resulting from the reaction with the fluid will precipitate on the wall of the membrane and obstruct it. A maximum operating pressure of 0.5 bar is set to avoid damaging the membranes. In addition, as the fluid is gaseous, the volume of acid solution can be controlled to prevent the decrease of said volume by evaporation. To that end, a volume control unit connected to the acid solution tank is incorporated comprising a water tank, an alarm buoy, a level float and a set of pipes. Thus, the filling tank is connected to the acid solution tank by means of the pipes. The filling tank houses the alarm buoy, so that when the tank empties and the buoy does not float, it varies the position thereof, which causes an internal mechanism of the buoy to activate the alarm. Furthermore, the float mechanism is regulated at a certain height, such that, from that height, the float closes a water inlet valve, and below that height, it opens said inlet valve, enabling the acid solution tank to be filled with water to the desired level.

The equipment of the invention can further comprise an incident control unit to alert and record errors or malfunctions in operation and an emergency stop button to stop the operation of the equipment in the event of malfunction.

All units of the equipment, such as the drive unit for driving the fluid with a high ammoniacal nitrogen content, the drive pump, temperature control unit, the nitrogen concentration control unit, the pressure control unit, the first pH control unit, the volume control unit, the incident control unit and/or the emergency stop button are connected and controlled by a control unit, preferably a Program Logic Controller (PLC).

According to the invention, because the fluid is gaseous, the drive unit for driving the fluid is a fan, and the ammonia recovery tank would preferably be located at a height. The equipment can comprise a fan control unit, comprising a speed probe and an actuator connected to the fan to regulate the rotation speed of said fan in order to control the speed of the flow generated at the inlet of the tank. The speed of the fluid flow is a very limiting factor in the design and it depends on the exploitation type and/or size. The speed of the fluid flow must allow it to pass through the membrane devices wherein the membranes are housed, but, if the fan drives the air too fast, efficiency in the capture of nitrogen would be lost due to the short retention time in the membranes.

The same is true in the hydraulic pipeline design, as head losses can cause the fluid to not arrive with enough pressure, causing jams in the equipment. Furthermore, the equipment of the invention comprises a humidification unit connected to the drive unit for driving the fluid intended to avoid excessive dryness of the membrane, which would cause water to evaporate from the acid solution. Said evaporation acidifies the acid solution and could damage the equipment, which includes the membrane devices and valves, among others. In addition, the humidification unit is configured to clean the suspended particles present in the fluid, providing moisture to maintain a relative humidity of around 50%, and to control the temperature of the membrane device inside the ammonia recovery tank.

The cleaning of suspended particles from the air is done by means of micro-sprinkling or spraying. This is because raising the humidity level minimises the time that the particles remain suspended in the air, since they are trapped by the microdroplets of water and are deposited on the ground, which contributes to keeping the surface of the membranes clean and not losing efficiency due to being covered by a layer of dust. However, high humidity values would cause the water microparticles to also drag the ammonia, decreasing the concentration thereof in the air and, therefore, also decreasing the efficiency in the recovery of ammonia.

Thus, the humidification unit comprises a humidity probe, to know the humidity of the air.

Since the fluid is gaseous, the equipment of the invention can further comprise one or more ammonia probes located at the inlet and outlet of the ammonia recovery tank, which enable the amount of ammonia in the fluid to be known.

The invention also relates to a method as defined by claim 5, which in general terms is a method for recovering ammonia from a gaseous fluid with a high ammoniacal nitrogen content, comprising the steps of:
- activating a fan for driving the fluid to direct the fluid with a high ammoniacal nitrogen content to an ammonia recovery tank, wherein a set of membrane devices with a tubular membrane made of e-PTFE material are located;
- pumping an acid solution from an acid solution tank to the ammonia recovery tank, circulating inside the membranes, by means of a drive pump;
- recovering the acid solution in the acid solution tank that circulates through the inside of the membranes located in the ammonia recovery membrane devices, by means of a recirculation duct, such that the ammonia that reacts with the sulphuric acid is fixed in the acid solution forming ammonium sulphate;
- controlling, by means of a temperature control unit, the temperature in the acid solution tank, comprising the phases of measuring the temperature in the acid solution tank and, in the event that the temperature of the acid solution is less than 10 °C, acting on a heater to increase the temperature of the acid solution, and
- controlling the pH in the acid solution tank, comprising the phases of measuring the pH in the acid solution tank and, in the event that the pH is greater than 2, adding concentrated sulphuric acid.

The steps of the method are controlled by means of the control unit.

In addition, the method of the invention comprises:
- Controlling the pressure with which the acid solution circulating through the inside of the membranes is supplied, comprising the phases of measuring the pressure and/or the flow rate at the inlet of the ammonia recovery tank using a pressure gauge and/or a rotameter and, in the event that it is greater than 0.5 bar, acting on a drive pump to modify the pumping pressure.

Furthermore, the method of the invention can comprise one or both of the following steps:
- Controlling the concentration of ammoniacal nitrogen in the acid solution, by means of an electrical conductivity measuring probe in the acid solution tank, in turn comprising the phases of measuring the conductivity of the acid at the inlet or outlet of the acid solution tank, and correlating it with the concentration of ammonium.
- Recording errors or malfunctions in operation by means of an incident control unit and/or an emergency stop button connected and controlled by a control unit.

According to the invention the fluid is gaseous, and the method comprises the steps of:
- Optionally controlling the fluid drive speed at the inlet of the ammonia recovery tank, through a fan control, which in turn comprises the phases of measuring fluid speed and, in case it is too high or low, acting on the fan to modify the power supplied and, therefore, the speed of the fluid, preferably using a manual potentiometer.
- Controlling the humidity of the ammonia recovery tank, which in turn comprises the phases of measuring the humidity of the tank to control the evaporation of water from the acid solution and in case the humidity is less than 50%, activating the humidity device.
- Optionally controlling the volume of acid solution to prevent the decrease of said volume by evaporation, incorporating a volume control unit, such that, a filling tank houses an alarm buoy, and, when the filling tank empties and the buoy does not float, this varies the position thereof causing an internal mechanism of the buoy to activate an alarm. Furthermore, a float mechanism is regulated at a certain height of the filling tank, such that, from that height, the float closes a water inlet valve, and below that height, it opens said inlet valve, enabling the acid solution tank to be filled with water to the desired level.
- Optionally controlling the amount of ammonia in the gaseous fluid at the inlet and

The main features that make the difference in the present case of a gaseous fluid are: 1) the process recovers ammonia from the air, 2) the control of the circulation pressure of the acid solution through the membranes and its flow rate, and 3) as it is a gaseous fluid, this new use of the membranes is implemented with a control and measurement unit for different parameters of both the air and the capture solution.

### DESCRIPTION OF THE DRAWINGS

Figure 1 shows a three-dimensional representation of a preferred embodiment of the equipment for recovering ammonia of the invention, for use thereof with gaseous fluids.
Figure 2 shows a side view of a preferred embodiment of the equipment for recovering ammonia of the invention, for use thereof with gaseous fluids.
Figure 3 shows a top view of a preferred embodiment of the equipment for recovering ammonia of the invention, for use thereof with gaseous fluids.

### PREFERRED EMBODIMENT OF THE INVENTION

The advantages of the invention are shown in the preferred exemplary embodiments shown in the Figures and described below.

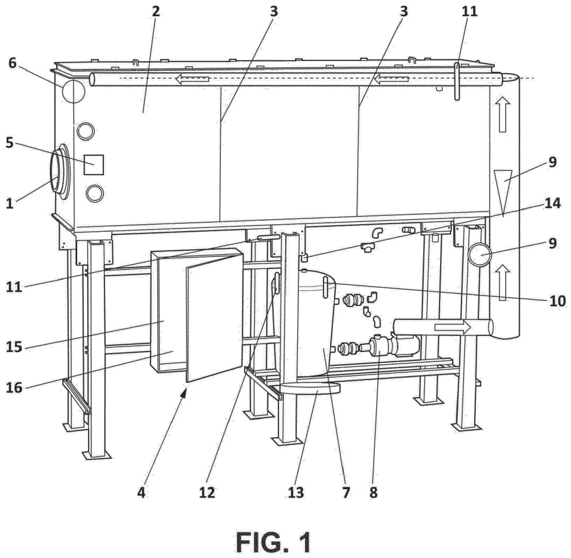

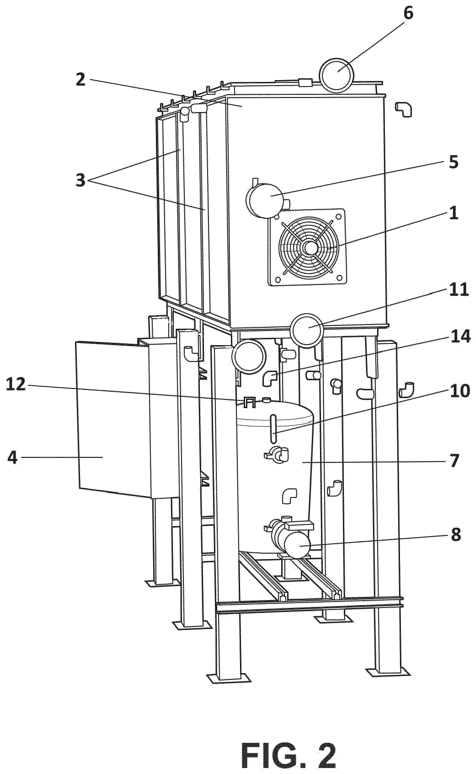

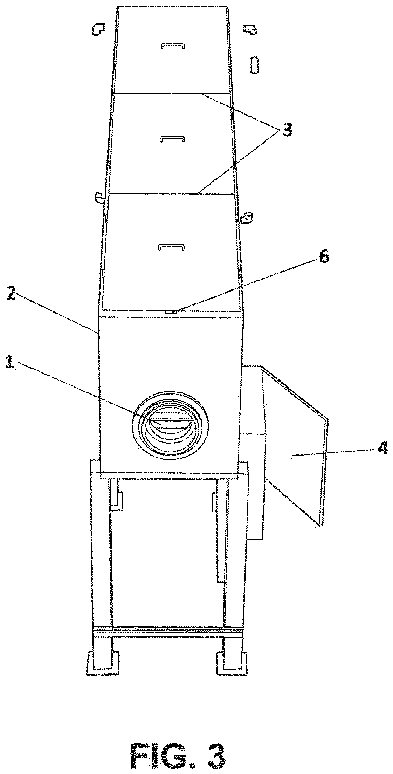

Figures 1 to 3 show a schematic view of an embodiment of the equipment for recovering ammonia of the invention, with a gaseous fluid. The equipment is intended to transform ammoniacal nitrogen from an ammonia-laden fluid into fertiliser salt through the use of gas-permeable membranes. Particularly, the equipment in Figures 1 to 3 is configured to treat the gases emitted by the excrements to the environment, in pig farms, poultry farms, in composting plants and any other activity that generates ammonia.

The equipment includes an ammonia recovery tank (2) and various membrane devices, in this case panels (3), located inside the closed tank and in turn comprising at least one tubular membrane made of e-PTFE material. This enables the amount of captured ammonia to be increased, using the panels (3) that are necessary according to the size of the target farm.

The number of panels (3) that are incorporated into the equipment are calculated based on the number of animals, the daily estimate of ammonia generated and the capture data. The amount of ammonia in the gaseous fluid depends on the volatilisation of ammonia which, in turn, depends on the concentration of ammonia in the emitting source, the pH and the ambient temperature. In the case of livestock farms it fundamentally depends on the type and management of the farm, number of animals and livestock feed.

A particular example establishes, according to ammonia emissions estimates from MAPAMA, that out of the amount that a hen excretes, 70% of the nitrogen in the droppings thereof volatilises. When extrapolating, it is estimated that a hen emits 1 g of NH₃/animal per day, and when multiplying by the number of animals on the farm, we would obtain the maximum theoretical initial quantity. The capture efficiency of the membrane is variable, from 10 - 80%, and by taking the average capture value and starting from an efficiency of 50%, we obtain 11 g of N/day and m² of membrane. With these estimates, the necessary metres of membrane to be installed in the equipment can be obtained.

The equipment also includes a fan (1), since the fluid is gaseous, which forces the circulation of gases rich in ammonia from the excrement through the panels (3). The speed of the flow generated is regulated in such a way as to enable the maximum absorption of ammonia through the membranes to improve the natural process of absorption of ammonia gas therethrough. Particularly, the fan has a fan control unit (5) comprising an anemometric probe and a manual potentiometer with 5 power levels, which is regulated according to the desired speed, and controls the power or revolutions of the fan, making it rotate faster or slower.

The equipment is configured to work continuously or in batches, to that end, the inlet and outlet of the ammonia recovery tank (2) can be regulated by means of valves.

The equipment shown further comprises an acid solution tank (7), intended to contain an acid solution which, when reacting with the ammonia contained in the gaseous fluid, forms a fertilising salt that concentrates in the acid solution. Connected to the acid solution tank (7), the equipment further comprises a drive pump (8), to drive the acid solution from the acid solution tank (7) to the membrane device (3) of the ammonia recovery tank (2), and a recirculation duct (14) to return, by the effect of gravity or by means of an auxiliary pump, the acid solution from the membrane device (3) of the ammonia recovery tank (2) to the acid solution tank (7).

The drive pump (8) is configured to ensure the same flow rate in all the membrane panels (3), according to the operational parameters of said membrane so as not to cause breaks or obstructions due to precipitation due to a low speed. The pressure at which the acid solution circulates is monitored by a pressure control unit (9), comprising a pressure gauge and a rotameter, to measure flow rate, setting a maximum operating pressure of 0.5 bar to avoid damaging the membranes.

In the ammonia recovery tank (2), a humidification unit (6) is located comprising a humidity probe, to control the humidity of the air to be treated, and moisten it when necessary by means of a nebulisation equipment, which cleans the air that enters when capturing, by means of the drops of water that are generated, suspended dust particles, forcing them to fall.

The concentration of nitrogen in the acid solution is controlled by means of a unit for controlling the concentration of nitrogen (11) comprising a probe for indirect measurement of the concentration of nitrogen in the acid solution tank (7).

The ammonia recovery equipment further comprises a temperature control unit (13) for depositing the acid solution (7), which monitors the temperature and, in case the temperature is less than 10°C, activates a heating blanket.

The acid solution tank further comprises the first pH control unit, comprising a pH probe (10) to determine the pH of the acid solution, such that when this is more than 2, concentrated sulphuric acid is added.

The equipment further comprises a volume control unit (12) which in the figure is represented as a filling unit and it can additionally comprise a water filling tank that is connected to the acid solution tank (7) by means of the pipes. The filling tank houses an alarm buoy, so that when the tank empties and the buoy does not float, it varies the position thereof, which causes an internal mechanism of the buoy to activate the alarm. Furthermore, a float mechanism is regulated at a certain height, such that, from that height, the float closes a water inlet valve, and below that height, it opens said inlet valve, enabling the acid solution tank to be filled with water to the desired level.

Dilute sulphuric acid is used as an acid solution for capturing ammonia.

A PLC-type control unit (4) controls the equipment, allowing real-time monitoring of the parameters: air speed, concentration of ammonia at the inlet and outlet of the ammonia recovery tank, air humidity, pH and temperature of the acid solution tank, pressure and/or flow rate of the acid solution, level and electrical conductivity of the acid solution in the acid solution tank (7). The control unit (4) is connected to the elements of the equipment to enable all the parameters to be observed, as well as the regulation thereof.

The equipment further comprises an incident control unit (15) that alerts to errors or malfunctions in operation and saves a history, recording any anomalous event or malfunction that prevents the correct operation of the equipment for further analysis. Likewise, the equipment comprises an emergency stop button (16) to stop the operation of the equipment in case of malfunction.

The equipment is modular and movable and enables the storage and transport of the pipes and supports that are necessary for the installation of equipment, ensuring rapid deployment of the equipment at the site wherein it is to be installed.

In processes such as composting, volatilisation factors depend on the Carbon/Nitrogen (C/N) balance of the materials to be composted, the temperature it reaches during the composting phases and the humidity.

The C/N ratio is preferably balanced to optimal values of 30, although the range 25-35 is valid. When it is below said value, as the temperature of the mass rises in the process, and with a suitable mixture humidity, ammonia emissions will be the highest since the higher the temperature, the greater the vapour, and it will drag excess nitrogen in ammonia form.

However, this can affect the volume of the acid, because, as a result of the osmotic pressure difference, this water vapour will pass into the capture solution. To mitigate this effect, the heating blanket of the temperature control unit (13) is used.

Depending on the seasons of the year, profit/loss can be compensated, for example, in summer there is high evaporation.

Thus, in the equipment of the invention, the air with a high ammoniacal nitrogen content is sucked in by means of the fan (1).

Next, the air is directed to the ammonia recovery tank (2) in which the panels (3) with tubular membranes made of e-PTFE material are contained, passing through the humidification unit (6). At the inlet and outlet of the ammonia recovery tank (2), the concentration of nitrogen of the acid solution is measured by means of the unit for controlling the concentration of nitrogen (11).

Likewise, the acid solution is continuously recirculated through the inside of the membranes of the panels (3) by means of the drive pump (8). The acid solution circulates through a closed circuit, so that it is pumped through the inside of the membranes and then returns to the acid solution tank (7), by means of the recirculation duct (14).

The control of all the parameters is carried out through a PLC unit (4).

## Claims

1. An equipment for recovering ammonia in fluids with a high ammoniacal nitrogen content, comprising:
- an ammonia recovery tank (2),
- a drive unit for driving (1) the fluid with a high ammoniacal nitrogen content connected to the ammonia recovery tank (2) intended to introduce the fluid into said ammonia recovery tank (2),
- one or more membrane devices (3), located inside the ammonia recovery tank (2), comprising at least one tubular membrane made of e-PTFE (expanded polytetrafluoroethylene) material, which is gas-permeable and hydrophobic,
- an acid solution tank (7), intended to contain an acid solution that captures and fixes ammonia, forming an ammonium salt,
- a drive pump (8), connected to the acid solution tank (7) and to the membrane devices (3), intended to drive the acid solution into the gas-permeable membrane devices (3), located in the ammonia recovery tank (2),
- a recirculation duct (14), connecting the membrane devices (3) located in the ammonia recovery tank (2) with the acid solution tank (7), to recirculate the acid solution reintroducing it into said acid solution tank (7),
- a temperature control unit (13), located inside the acid solution tank (7), comprising a temperature probe and a heater to increase the temperature of the acid solution if the temperature of the acid solution is less than 10 °C;
- a first pH control unit (10), located inside the acid solution tank (7), comprising a pH probe and an actuator intended to add concentrated sulphuric acid when the measured pH is greater than 2; and
- a pressure control unit (9) for controlling the pressure of the acid solution connected to the acid solution tank (7) at the inlet of the ammonia recovery tank (2), comprising an actuator, a pressure gauge to measure pressure, and a rotameter to control the flow rate, connected to the drive pump (8), such that if they are outside of a predetermined range, the actuator acts on the drive pump (8) to modify the pumping pressure, and configured to set a maximum operating pressure of 0.5 bar;
wherein the drive unit (1) for driving the fluid is a fan (1), and the fluid is gaseous, and the equipment further comprises:
- a humidification unit (6) located in the ammonia recovery tank (2), connected to the drive unit (1), intended to generate humidity and clean the large particles present in the gaseous fluid and configured to maintain a relative humidity of around 50%.

2. The equipment according to claim 1, further comprising a unit for controlling the concentration of nitrogen in the acid solution (11), connected to the acid solution tank (7), comprising one or more probes for indirect measurement of concentration of nitrogen by electrical conductivity.

3. The equipment according to claim 1, further comprising a unit for controlling the volume (12) of the acid solution, comprising a water filling tank; an alarm buoy, housed in the filling tank, so that when the tank empties and the buoy does not float, an alarm is activated; a level float, located inside the acid solution tank (7) and regulated at a certain height, such that, from that height, the float closes a water inlet valve, and below that height, it opens said inlet valve, enabling the tank to be filled with the acid solution (11); and a set of pipes connecting the acid solution tank (7) with the filling tank of the volume control unit (12).

4. The equipment according to claim 1, further comprising a fan control unit (5), comprising a speed probe and an actuator connected to the fan (1) to regulate the rotation speed of said fan (1) in order to control the speed of the flow generated at the inlet of the ammonia recovery tank (2).

5. A method for recovering ammonia in a gaseous fluid with a high ammoniacal nitrogen content, comprising the steps of:
- activating a fan (1) for driving the fluid to direct the fluid with a high ammoniacal nitrogen content to an ammonia recovery tank (2), wherein membrane devices (3) with tubular membrane made of e-PTFE material are found, which would be submerged in the fluid;
- pumping an acid solution from an acid solution tank (7) towards the membrane device (3) located in the ammonia recovery tank (2), by means of a drive pump (8);
- recovering the acid solution in the acid solution tank (7) after circulating through the inside of the membranes (3) of the ammonia recovery tank (2) through a recirculation duct (14);
- controlling, by means of a temperature control unit (13), the temperature in the acid solution tank (7), comprising the phases of measuring the temperature in the acid solution tank (7) and, in the event that the temperature of the acid solution is less than 10 °C, acting on a heater to increase the temperature of the acid solution to prevent the solution from freezing;
- controlling the pH in the acid solution tank (7), comprising the phases of measuring the pH in the acid solution tank (7) and, in the event that the pH is greater than 2, adding concentrated sulphuric acid;
- controlling, by means of a pressure control unit (9), the pressure with which the acid solution is pumped into the ammonia recovery tank (2), comprising the phases of measuring the pressure and/or flow rate at the inlet of the ammonia recovery tank (2) using a pressure gauge and/or a rotameter and, in the event that they are outside of a predetermined range, acting on a drive pump (8) to modify the pumping pressure, setting a maximum operating pressure of 0.5 bar; and
- controlling humidity by means of a humidification unit (6) located in the ammonia recovery tank (2), generating humidity, cleaning the large particles present in the gaseous fluid and maintaining a relative humidity of around 50%.

6. The method according to claim 5, further comprising a step of controlling, by means of a unit for controlling the concentration of nitrogen in the acid solution (11), the concentration of nitrogen in the acid solution, in turn comprising a step of indirect measurement of the concentration of nitrogen by means of electrical conductivity in the acid solution tank (7).

## Patentansprüche

1. Einrichtung zum Rückgewinnen von Ammoniak in Fluiden mit hohem Ammoniakstickstoffgehalt, umfassend:
- einen Ammoniakrückgewinnungstank (2),
- eine Antriebseinheit (1) zum Antreiben des Fluids mit hohem Ammoniakstickstoffgehalt, verbunden mit dem Ammoniakrückgewinnungstank (2), die dazu bestimmt ist, das Fluid in den Ammoniakrückgewinnungstank (2) einzuleiten,
- eine oder mehrere Membranvorrichtungen (3), die sich innerhalb des Ammoniakrückgewinnungstanks (2) befinden, umfassend mindestens eine rohrförmige Membran aus e-PTFE-Material (expandiertes Polytetrafluorethylen), die gasdurchlässig und hydrophob ist,
- einen Säurelösungstank (7), der dazu bestimmt ist, eine Säurelösung zu enthalten, die Ammoniak auffängt und fixiert, wobei ein Ammoniumsalz gebildet wird,
- eine Antriebspumpe (8), die mit dem Säurelösungstank (7) und den Membranvorrichtungen (3) verbunden ist, die dazu bestimmt ist, die Säurelösung in die gasdurchlässigen Membranvorrichtungen (3) zu treiben, die sich im Ammoniakrückgewinnungstank (2) befinden,
- eine Rückführungsleitung (14), welche die Membranvorrichtungen (3), die sich im Ammoniakrückgewinnungstank (2) befinden, mit dem Säurelösungstank (7) verbindet, um die Säurelösung rückzuführen, indem sie diese wieder in den Säurelösungstank (7) einleitet,
- eine Temperatursteuereinheit (13), die sich innerhalb des Säurelösungstanks (7) befindet, umfassend eine Temperatursonde und einen Heizer, um die Temperatur der Säurelösung zu erhöhen, falls die Temperatur der Säurelösung weniger als 10 °C beträgt;
- eine erste pH-Steuereinheit (10), die sich innerhalb des Säurelösungstanks (7) befindet, umfassend eine pH-Sonde und einen Aktuator, der dazu bestimmt ist, konzentrierte Schwefelsäure hinzuzufügen, wenn der gemessene pH-Wert größer als 2 ist; und
- eine Drucksteuereinheit (9) zum Steuern des Drucks der Säurelösung, die mit dem Säurelösungstank (7) am Einlass des Ammoniakrückgewinnungstanks (2) verbunden ist, umfassend einen Aktuator, ein Druckmessgerät zum Messen des Drucks und einen Rotameter zum Steuern der Durchflussrate, verbunden mit der Antriebspumpe (8), derart, dass, wenn sie außerhalb eines vorbestimmten Bereichs liegen, der Aktuator auf die Antriebspumpe (8) wirkt, um den Pumpendruck zu modifizieren, und konfiguriert, um einen maximalen Betriebsdruck von 0,5 bar einzustellen;
wobei die Antriebseinheit (1) zum Antreiben des Fluids ein Gebläse (1) ist und das Fluid gasförmig ist, und die Einrichtung ferner Folgendes umfasst:
- eine Befeuchtungseinheit (6), die sich im Ammoniakrückgewinnungstank (2) befindet, mit der Antriebseinheit (1) verbunden, die dazu bestimmt ist, Feuchtigkeit zu generieren und die im gasförmigen Fluid vorhandenen großen Partikel zu reinigen, und dazu konfiguriert ist, eine relative Feuchtigkeit von etwa 50 % aufrechtzuerhalten.

2. Einrichtung gemäß Anspruch 1, ferner umfassend eine Einheit zum Steuern der Stickstoffkonzentration in der Säurelösung (11), die mit dem Säurelösungstank (7) verbunden ist, umfassend eine oder mehrere Sonden zum indirekten Messen der Stickstoffkonzentration durch elektrische Leitfähigkeit.

3. Einrichtung gemäß Anspruch 1, ferner umfassend eine Einheit zum Steuern des Volumens (12) der Säurelösung, umfassend einen Wasserbefüllungstank; eine Alarmboje, die in dem Befüllungstank aufgenommen ist, so dass, wenn der Tank sich leert und die Boje nicht schwimmt, ein Alarm aktiviert wird; einen Pegelschwimmer, der sich innerhalb des Säurelösungstanks (7) befindet und auf eine gewisse Höhe eingestellt ist, derart, dass der Schwimmer aus dieser Höhe ein Einlassventil für Wasser schließt und unterhalb dieser Höhe das Einlassventil öffnet, wodurch der Tank mit der Säurelösung (11) gefüllt werden kann; und einen Satz von Rohrleitungen, die den Säurelösungstank (7) mit dem Befüllungstank der Volumensteuereinheit (12) verbinden.

4. Einrichtung gemäß Anspruch 1, ferner umfassend eine Gebläsesteuereinheit (5), umfassend eine Geschwindigkeitssonde und einen Aktuator, der mit dem Gebläse (1) verbunden ist, um die Drehzahl des Gebläses (1) zu regulieren, um die Geschwindigkeit des am Einlass des Ammoniakrückgewinnungstanks (2) generierten Durchflusses zu steuern.

5. Verfahren zum Rückgewinnen von Ammoniak in einem gasförmigen Fluid mit hohem Ammoniakstickstoffgehalt, umfassend die Schritte:
- Aktivieren eines Gebläses (1) zum Antreiben des Fluids, um das Fluid mit hohem Ammoniakstickstoffgehalt zu einem Ammoniakrückgewinnungstank (2) zu leiten, wobei sich Membranvorrichtungen (3) mit einer röhrenförmigen Membran aus e-PTFE-Material befinden, die in das Fluid eingetaucht werden würden;
- Pumpen einer Säurelösung aus einem Säurelösungstank (7) in Richtung der Membranvorrichtung (3), die sich im Ammoniakrückgewinnungstank (2) befindet, mittels einer Antriebspumpe (8);
- Rückgewinnen der Säurelösung im Säurelösungstank (7), nachdem sie durch das Innere der Membranen (3) des Ammoniakrückgewinnungstanks (2) durch eine Rückführungsleitung (14) geströmt ist;
- Steuern der Temperatur im Säurelösungstank (7) mittels einer Temperatursteuereinheit (13), umfassend die Phasen des Messens der Temperatur im Säurelösungstank (7) und, für den Fall, dass die Temperatur der Säurelösung weniger als 10 °C beträgt, des Wirkens auf einen Heizer, um die Temperatur der Säurelösung zu erhöhen, um ein Gefrieren der Lösung zu verhindern;
- Steuern des pH-Werts im Säurelösungstank (7), umfassend die Phasen des Messens des pH-Werts im Säurelösungstank (7) und, für den Fall, dass der pH-Wert größer als 2 ist, Hinzufügen von konzentrierter Schwefelsäure;
- Steuern des Drucks, mit dem die Säurelösung in den Ammoniakrückgewinnungstank (2) gepumpt wird, mittels einer Drucksteuereinheit (9), umfassend die Phasen des Messens des Drucks und/oder der Durchflussrate am Einlass des Ammoniakrückgewinnungstanks (2) unter Verwendung eines Druckmessgeräts und/oder eines Rotameters und, für den Fall, dass sie außerhalb eines vorbestimmten Bereichs liegen, Wirken auf eine Antriebspumpe (8), um den Pumpendruck zu modifizieren, wobei ein maximaler Betriebsdruck von 0,5 bar eingestellt wird; und
- Steuern der Feuchtigkeit mittels einer Befeuchtungseinheit (6), die sich im Ammoniakrückgewinnungstank (2) befindet, Generieren von Feuchtigkeit, Reinigen der im gasförmigen Fluid vorhandenen großen Partikel und Aufrechterhalten einer relativen Feuchtigkeit von etwa 50 %.

6. Verfahren gemäß Anspruch 5, ferner umfassend einen Schritt des Steuerns der Stickstoffkonzentration in der Säurelösung mittels einer Einheit zum Steuern der Stickstoffkonzentration in der Säurelösung (11), wiederum umfassend einen Schritt des indirekten Messens der Stickstoffkonzentration mittels der elektrischen Leitfähigkeit im Säurelösungstank (7).

## Revendications

1. Dispositif de récupération de l'ammoniaque dans des fluides à haute teneur en azote ammoniacal, comprenant :
- un réservoir de récupération d'ammoniaque (2),
- une unité d'entraînement pour l'entraînement (1) du fluide à haute teneur en azote ammoniacal reliée au réservoir de récupération d'ammoniaque (2) destinée à introduire le fluide dans ledit réservoir de récupération d'ammoniaque (2),
- un ou plusieurs dispositifs à membrane (3), situés à l'intérieur du réservoir de récupération d'ammoniaque (2), comprenant au moins une membrane tubulaire fabriquée en matériau e-PTFE (polytétrafluoroéthylène expansé), qui est perméable aux gaz et hydrophobe,
- un réservoir de solution acide (7), destiné à contenir une solution acide qui capture et fixe l'ammoniaque, formant un sel d'ammonium,
- une pompe d'entraînement (8), reliée au réservoir de solution acide (7) et aux dispositifs à membrane (3), destinée à entraîner la solution acide dans les dispositifs à membrane perméables aux gaz (3), située dans le réservoir de récupération d'ammoniaque (2),
- un conduit de recirculation (14), reliant les dispositifs à membrane (3) situés dans le réservoir de récupération d'ammoniaque (2) avec le réservoir de solution acide (7), pour faire recirculer la solution acide en la réintroduisant dans ledit réservoir de solution acide (7),
- une unité de commande de température (13), située à l'intérieur du réservoir de solution acide (7), comprenant une sonde de température et un élément chauffant pour augmenter la température de la solution acide si la température de la solution acide est inférieure à 10 °C ;
- une première unité de commande de pH (10), située à l'intérieur du réservoir de solution acide (7), comprenant une sonde de pH et un actionneur destiné à ajouter de l'acide sulfurique concentré lorsque le pH mesuré est supérieur à 2 ; et
- une unité de commande de pression (9) pour commander la pression de la solution acide reliée au réservoir de solution acide (7) au niveau de l'admission du réservoir de récupération d'ammoniaque (2), comprenant un actionneur, un manomètre pour mesurer la pression et un rotamètre pour commander le débit, reliée à la pompe d'entraînement (8), de telle sorte que s'ils se trouvent en dehors d'une plage prédéterminée, l'actionneur agit sur la pompe d'entraînement (8) pour modifier la pression de pompage, et conçue pour régler une pression de fonctionnement maximale de 0,5 bar ;
dans lequel l'unité d'entraînement (1) pour l'entraînement du fluide est un ventilateur (1), et le fluide est gazeux, et le dispositif comprend en outre :
- une unité d'humidification (6) située dans le réservoir de récupération d'ammoniaque (2), reliée à l'unité d'entraînement (1), destinée à générer de l'humidité et à nettoyer les grosses particules présentes dans le fluide gazeux et conçue pour maintenir une humidité relative d'environ 50 %.

2. Dispositif selon la revendication 1, comprenant en outre une unité de commande de concentration d'azote dans la solution acide (11), reliée au réservoir de solution acide (7), comprenant une ou plusieurs sondes pour la mesure indirecte de la concentration d'azote par conductivité électrique.

3. Dispositif selon la revendication 1, comprenant en outre une unité pour la commande du volume (12) de la solution acide, comprenant un réservoir de remplissage d'eau ; une bouée d'alarme, logée dans le réservoir de remplissage, de sorte que lorsque le réservoir se vide et que la bouée ne flotte pas, une alarme est activée ; un flotteur de niveau, situé à l'intérieur du réservoir de solution acide (7) et régulé à une certaine hauteur, de telle sorte que, à partir de cette hauteur, le flotteur ferme une soupape d'admission d'eau, et en dessous de cette hauteur, il ouvre ladite soupape d'admission, permettant au réservoir de se remplir avec la solution acide (11) ; et un ensemble de tuyaux reliant le réservoir de solution acide (7) au réservoir de remplissage de l'unité de commande de volume (12).

4. Dispositif selon la revendication 1, comprenant en outre une unité de commande de ventilateur (5), comprenant une sonde de vitesse et un actionneur relié au ventilateur (1) pour réguler la vitesse de rotation dudit ventilateur (1) afin de commander la vitesse du flux généré au niveau de l'admission du réservoir de récupération d'ammoniaque (2).

5. Méthode de récupération d'ammoniaque dans un fluide gazeux à haute teneur en azote ammoniacal, comprenant les étapes consistant à :
- activer un ventilateur (1) pour l'entraînement du fluide pour diriger le fluide à haute teneur en azote ammoniacal vers un réservoir de récupération d'ammoniaque (2), dans laquelle des dispositifs à membrane (3) avec une membrane tubulaire fabriquée en matériau e-PTFE sont présents, qui seraient immergés dans le fluide ;
- pomper une solution acide depuis un réservoir de solution acide (7) vers le dispositif à membrane (3) situé dans le réservoir de récupération d'ammoniaque (2), au moyen d'une pompe d'entraînement (8) ;
- récupérer la solution acide dans le réservoir de solution acide (7) après circulation à travers l'intérieur des membranes (3) du réservoir de récupération d'ammoniaque (2) à travers un conduit de recirculation (14) ;
- commander, au moyen d'une unité de commande de température (13), la température dans le réservoir de solution acide (7), comprenant les phases de mesure de la température dans le réservoir de solution acide (7) et, dans le cas où la température de la solution acide est inférieure à 10 °C, d'action sur un élément chauffant pour augmenter la température de la solution acide afin d'empêcher la solution de geler ;
- commander le pH dans le réservoir de solution acide (7), comprenant les phases de mesure du pH dans le réservoir de solution acide (7) et, dans le cas où le pH est supérieur à 2, d'ajout d'acide sulfurique concentré ;
- commander, au moyen d'une unité de commande de pression (9), la pression avec laquelle la solution acide est pompée dans le réservoir de récupération d'ammoniaque (2), comprenant les phases de mesure de la pression et/ou du débit au niveau de l'admission du réservoir de récupération d'ammoniaque (2) à l'aide d'un manomètre et/ou d'un rotamètre et, dans le cas où ils se trouvent en dehors d'une plage prédéterminée, d'action sur une pompe d'entraînement (8) pour modifier la pression de pompage, réglant une pression de service maximale de 0,5 bar ; et
- commander l'humidité au moyen d'une unité d'humidification (6) située dans le réservoir de récupération d'ammoniaque (2), générant de l'humidité, nettoyant les grosses particules présentes dans le fluide gazeux et maintenant une humidité relative d'environ 50 %.

6. Méthode selon la revendication 5, comprenant en outre une étape de commande, au moyen d'une unité pour la commande de la concentration d'azote dans la solution acide (11), de la concentration d'azote dans la solution acide, comprenant à son tour une étape de mesure indirecte de la concentration d'azote au moyen de la conductivité électrique dans le réservoir de solution acide (7).
